# EUROPÄISCHE PATENTSCHRIFT

(11) **EP 1 206 719 B1**
(45) Veröffentlichungstag und Bekanntmachung des Hinweises auf die Patenterteilung: **08.09.2004**
(21) Anmeldenummer: 00945827.4
(22) Anmeldetag: 27.06.2000
(51) Int. Cl.: G02B 13/08, G02B 3/06, G02B 27/09, G02B 6/42, H01S 3/00

(54) **ABBILDUNGSSYSTEM**
IMAGING SYSTEM
SYSTEME DE FORMATION D'IMAGE

(30) Priorität: 13.07.1999 DE 19932592
(43) Veröffentlichungstag der Anmeldung: 22.05.2002
(73) Patentinhaber: Hentze-Lissotschenko Patentverwaltungs GmbH & Co.KG, 25870 Norderfriedrichskoog (DE)
(72) Erfinder: MIKHAILOV, Alexei, D-44227 Dortmund (DE); HAUSCHILD, Dirk, D-50733 Köln (DE)
(74) Vertreter: Basfeld, Rainer, Dr. Dipl.-Phys.
(86) Internationale Anmeldenummer: PCT/EP2000/005935
(87) Internationale Veröffentlichungsnummer: WO 2001/004681

(56) Entgegenhaltungen:
- EP-A- 0 367 032
- GB-A- 2 220 501
- US-A- 2 303 113
- US-A- 3 822 932
- US-A- 4 306 278
- US-A- 4 415 239
- US-A- 4 530 574
- US-A- 4 736 225
- US-A- 5 353 150
- US-A- 5 355 388
- US-A- 5 517 359
- US-A- 5 581 414
- US-A- 5 592 332
- US-A- 5 592 333
- US-A- 5 636 059
- US-A- 5 844 723
- PATENT ABSTRACTS OF JAPAN vol. 003, no. 001 (E-082), 11. Januar 1979 (1979-01-11) -& JP 53 127722 A (FUJI PHOTO FILM CO LTD), 8. November 1978 (1978-11-08)

## Beschreibung

Die vorliegende Erfindung betrifft ein Abbildungssystem, insbesondere ein Abbildungssystem zur Abbildung elektromagnetischer Strahlung im optischen Spektralbereich umfassend mindestens ein Linsenelement sowie mindestens eine erste und eine zweite optisch funktionale Grenzfläche, durch die die elektromagnetische Strahlung hindurchtreten kann, wobei die mindestens eine erste und die mindestens eine zweite optisch funktionale Grenzfläche entweder an dem einen oder an zwei oder mehreren Linsenelementen angeordnet sein können, wobei die mindestens eine erste und die mindestens eine zweite optisch funktionale Grenzfläche zumindest abschnittsweise eine Zylinderlinsengeometrie oder eine zylinderlinsenähnliche Geometrie aufweisen, wobei die Zylinderachse der mindestens einen ersten optisch funktionalen Grenzfläche und die Zylinderachse der mindestens einen zweiten optisch funktionalen Grenzfläche etwa senkrecht zueinander ausgerichtet sind, und wobei mindestens ein zusätzliches Korrekturelement zur Behebung von Abbildungsfehlern mit zwei einander gegenüberliegenden dritten optisch funktionalen Grenzflächen vorgesehen ist, die ebenfalls zumindest abschnittsweise eine Zylinderlinsengeometrie oder eine zylinderlinsenähnliche Geometrie aufweisen.

Ein Abbildungssystem der eingangs genannten Art ist aus der britischen Patentanmeldung GB-A-2 220 501 bekannt. Vermittels des darin beschriebenen Abbildungssystems werden beispielsweise von einem Laserdiodenbarren ausgehende Laserstrahlen auf eine Glasfaser fokussiert. Das Abbildungssystem umfasst zwei Glaszylinder mit jeweils einer konvexen Eintrittsfläche mit Zylindergeometrie und einer konvexen Austrittsfläche mit Zylindergeometrie, wobei die Zylinderachsen dieser Glaszylinder parallel zueinander ausgerichtet sind und wobei diese Zylinderachsen im wesentlichen senkrecht zur Ausbreitungsrichtung der Laserstrahlung ausgerichtet sind. Weiterhin umfasst das Abbildungssystem ein Array von weiteren Linsenelementen, die eine zweite optisch funktionale Grenzfläche mit Zylindergeometrie aufweisen, wobei die Zylinderachse dieser optisch funktionalen Grenzfläche senkrecht zu den Zylinderachsen der vorgenannten Glaszylinder ausgerichtet ist. Einer der beiden Glaszylinder kann als Korrekturelement zur Behebung von Abbildungsfehlern mit zwei einander gegenüberliegenden dritten optisch funktionalen Grenzflächen angesehen werden, wobei dieses Korrekturelement derart gestaltet werden kann, dass die durch die beiden übrigen Linsenelemente bewirkte Abbildung hinsichtlich auftretender Abbildungsfehler korrigiert werden kann.

Aus dem US-Patent US-A-3,822,932 ist eine Vorrichtung für die Messung der sphärischen und zylindrischen optischen Korrekturbeiträge für das Sehvermögen eines Auges bekannt. Diese Vorrichtung umfasst sechs auf einer optischen Achse hintereinander angeordnete Linsenelemente. Bei den Linsenelementen handelt es sich zum einen um eine sphärische Bikonvexlinse und eine sphärische Bikonkavlinse. Weiterhin sind zwei Paare von Zylinderlinsen auf der optischen Achse angeordnet, die sowohl einzeln als auch zusammen verdreht werden können. Jedes der Paare von Zylinderlinsen umfasst eine bikonvexe Zylinderlinse und eine bikonkave Zylinderlinse, wobei jeweils die Brennweiten der optisch funktionalen Grenzflächen der bikonvexen und der bikonkaven Zylinderlinsen in einem jeden der Paare entgegengesetzt gleich sind. Die Zylinderlinsen können für die Feststellung der zylindrischen optischen Korrekturbeiträge zu dem Sehvermögen des Auges beliebig gegeneinander verdreht werden.

Aus dem US-Patent US 5,844,723 ist ein Abbildungssystem bekannt, das zur Fokussierung des von einer Laserdiode ausgehenden Lichts auf die Eintrittsfläche einer Lichtleitfaser dient. Dazu werden zwei Zylinderlinsen verwendet, deren Zylinderachsen senkrecht aufeinanderstehen. Als nachteilig bei diesem System erweist sich, dass die durch die beiden zueinander gekreuzten Zylinderlinsen auftretenden Abbildungsfehler nicht kompensiert werden können.

Das der vorliegenden Erfindung zugrundeliegende Problem ist die Schaffung eines Abbildungssystems der eingangs genannten Art, bei dem Abbildungsfehler weitgehend vermeidbar sind.

Dieses Problem wird durch die Merkmale des Anspruchs 1 gelöst. Gemäß Anspruch 1 ist vorgesehen, dass die Zylinderachsen der dritten optisch funktionalen Grenzflächen senkrecht zueinander und unter einem Winkel von 45° zu den Zylinderachsen der ersten und zweiten optisch funktionalen Grenzflächen ausgerichtet sind. Vermittels dieses zusätzlichen Korrekturelements können Abbildungsfehler behoben werden, so dass die entsprechenden Wellenfronten der durch das Abbildungssystem hindurchtretenden elektromagnetischen Strahlung korrigiert werden bzw. in ebene Wellenfronten umgewandelt werden. Bei der erfindungsgemäßen Ausrichtung der dritten optisch funktionalen Grenzflächen des Korrekturelements lassen sich die durch beispielsweise mit einer sphärischen Zylindergeometrie versehenen zueinander senkrecht stehenden ersten und zweiten optisch funktionalen Grenzflächen erzeugten Abbildungsfehler weitestgehend korrigieren.

Erfindungsgemäße Abbildungssysteme sind einsetzbar für den gesamten optischen Spektralbereich vom Vakuum-UV-Bereich bis zum fernen Infrarotbereich. Es ist erfindungsgemäß auch denkbar, im Röntgenbereich erfindungsgemäße Abbildungssysteme einzusetzen, solange die Abbildung durch brechende optisch aktive Grenzflächen erfolgt.

Es besteht erfindungsgemäß die Möglichkeit, dass die mindestens eine erste und/oder die mindestens eine zweite optisch funktionale Grenzfläche eine asphärische Zylinderlinsengeometrie oder eine asphärische zylinderlinsenähnliche Geometrie aufweisen. Die asphärische Zylinderlinsengeometrie kann beispielsweise durch einen elliptischen oder hyperbolischen oder parabolischen Zylinderabschnitt gebildet sein. Durch die Wahl von asphärischen Zylinderlinsengeometrien für die optisch funktionalen Grenzflächen der Linsenelemente wird der Unterschied der optischen Weglängen der durch das Abbildungssystem hindurchtretenden elektromagnetischen Strahlung minimiert, so dass ebene Wellenfronten nach dem Durchgang durch das Abbildungssystem vorliegen.

Erfindungsgemäß besteht die Möglichkeit, dass mindestens zwei Linsenelemente vorgesehen sind, wobei an einem der Linsenelemente die erste optisch funktionale Grenzfläche und an einem anderen der Linsenelemente die zweite optisch funktionale Grenzfläche angeordnet sind. Es besteht auch die Möglichkeit, jedes der Linsenelemente mit zwei optisch funktionalen Grenzflächen zu versehen, wobei dann beispielsweise bei jedem der Linsenelemente die einander gegenüberliegenden optisch funktionalen Grenzflächen Zylinderlinsengeometrien aufweisen, deren Richtungen im wesentlichen konstanter Krümmung, das heißt deren Zylinderachsen, senkrecht zueinander stehen. Alternativ besteht auch die Möglichkeit, jedes der Linsenelemente so auszuführen, dass jeweils eine optisch funktionale erste oder zweite Grenzfläche und eine dieser gegenüberliegende plane Eintritts- bzw. Austrittsfläche vorgesehen sind.

Insbesondere kann vorgesehen sein, dass das Korrekturelement zwischen dem Linsenelement mit der ersten optisch funktionalen Grenzfläche und dem Linsenelement mit der zweiten optisch funktionalen Grenzfläche angeordnet ist.

Die dritten optisch funktionalen Grenzflächen können konkav ausgebildet sein.

Es besteht erfindungsgemäß die Möglichkeit, die mindestens eine dritte optisch funktionale Grenzfläche mit einer sphärischen oder einer asphärischen Zylinderlinsengeometrie zu versehen. Insbesondere bei einer asphärischen Zylinderlinsengeometrie der mindestens einen dritten optisch funktionalen Grenzfläche des Korrekturelements lassen sich durch die beiden Linsenelemente bewirkte Abbildungsfehler optimal korrigieren. Die asphärische Zylinderlinsengeometrie kann wiederum beispielsweise durch einen elliptischen, hyperbolischen oder parabolischen Zylinderabschnitt gebildet werden.

Es besteht die Möglichkeit, die beiden Linsenelemente und insbesondere zusätzlich das Korrekturelement auf einem gemeinsamen Träger anzuordnen. Eine derartige kompakte Ausführungsform eines erfindungsgemäßen Abbildungssystems kann beispielsweise dazu verwendet werden, dass von einer Laserdiode ausgehende Licht auf die Eintrittsfläche einer Glasfaser zu fokussieren.

Es besteht auch die Möglichkeit, ein erfindungsgemäßes Abbildungssystem, beispielsweise in Form eines auf einem gemeinsamen Träger untergebrachten Abbildungssystems, als Mikroobjektiv zu verwenden, das erfindungsgemäß durchaus sehr weitwinklig ausgelegt werden kann.

Bei den unter Umständen sehr weitwinkligen Objektiven können aufgrund der erfindungsgemäß sehr wirksamen Korrektur von Abbildungsfehlern Winkel von mehr als 90° bei ausreichend guter Qualität erzielt werden.

Hier kann es unter Umständen ausgesprochen vorteilhaft sein, anstelle von Linsenelementen Arrays oder lineare Zeilen von insbesondere identischen Linsenelementen zu verwenden. Zusätzlich können auch anstelle von Korrekturelementen Arrays oder lineare Zeilen von insbesondere identischen Korrekturelementen Verwendung finden. Hierbei erweist es sich als besonders vorteilhaft, dass durch die Verwendung von Zylinderlinsen oder zylinderlinsenähnlichen Geometrien rechteckige bzw. quadratische Linsenelemente und Korrekturelemente Verwendung finden können, so dass Arrays oder lineare Zeilen von Linsenelementen bzw. Korrekturelementen mit wesentlich besserer Raumausnutzung bzw. mit maximal erzielbarer Packungsdichte erstellt werden können. Derartige lineare Zeilen oder zweidimensionale Arrays von Linsenelementen und gegebenenfalls Korrekturelementen können für CCD-Kameras oder CMOS-Kameras verwendet werden. Es besteht insbesondere auch die Möglichkeit, derartige Abbildungssysteme für die Prozeßbeobachtung einzusetzen, beispielsweise für die Beobachtung von Schweißprozessen.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a: eine Seitenansicht einer Ausführungsform eines erfindungsgemäßen Abbildungssystems;
- Fig. 1b: eine Draufsicht auf das Abbildungssystem gemäß Fig. 1a;
- Fig. 1c: eine Ansicht gemäß dem Pfeil Ic in Fig. 1a;
- Fig. 2: eine perspektivische Ansicht eines Korrekturelements des Abbildungssystems nach Fig. 1.

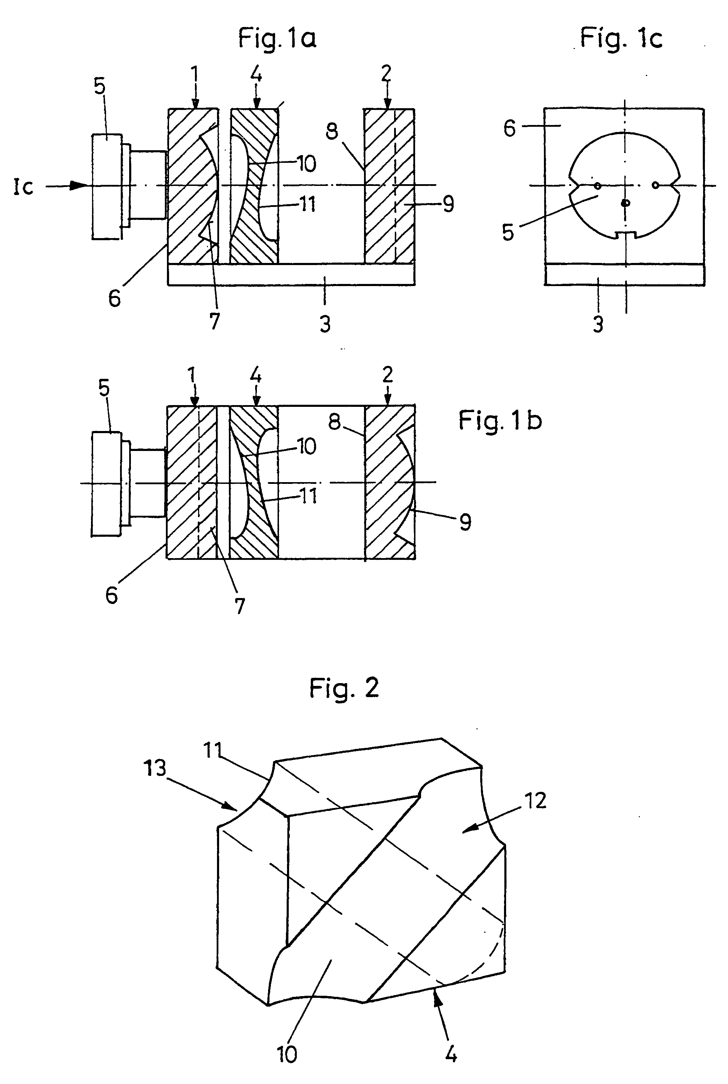

Zunächst wird auf Fig. 1 Bezug genommen. Die darin abgebildete Ausführungsform eines erfindungsgemäßen Abbildungssystems umfaßt zwei Linsenelemente 1, 2, die im wesentlichen parallel zueinander und voneinander beabstandet auf einem Träger 3 angebracht sind. Zwischen den beiden Linsenelementen ist in dem abgebildeten Ausführungsbeispiel ein Korrekturelement 4 angeordnet, das ebenfalls im wesentlichen parallel zu den beiden Linsenelement 1, 2 ausgerichtet ist und ebenfalls auf dem Träger 3 angebracht ist. Mit dem durch die beiden Linsenelemente 1, 2 und das Korrekturelement 4 gegebenen Abbildungssystem kann beispielsweise das von einer in Fig. 1 abgebildeten Laserdiode 5 ausgehende Licht auf einen kleinen in Fig. 1a und Fig. 1b im rechten Teil angeordneten Raumsektor, der beispielsweise der Eintrittsfläche einer Lichtleitfaser entspricht, fokussiert werden.

Das Linsenelement 1 weist auf seiner in Fig. 1a und Fig. 1b linken Seite eine plane Eintrittsfläche 6 sowie auf seiner rechten Seite eine optisch funktionale Grenzfläche 7 auf. Entsprechend weist das zweite Linsenelement 2 auf seiner linken Seite eine plane Eintrittsfläche 8 sowie auf seiner rechten Seite eine optisch funktionale Grenzfläche 9 auf. In dem abgebildeten Ausführungsbeispiel weisen die erste und die zweite optisch funktionale Grenzfläche 7, 9 abschnittsweise eine Zylinderlinsengeometrie auf, wobei in dem abgebildeten Ausführungsbeispiel die Zylinderlinsengeometrie durch einen Zylinderabschnitt mit teilkreisförmigem Querschnitt gebildet wird. Die beiden Zylinderachsen dieser Zylinderabschnitte der ersten und der zweiten optisch funktionalen Grenzfläche 7, 9 stehen in dem abgebildeten Ausführungsbeispiel senkrecht zueinander.

Es besteht die Möglichkeit, anstelle der sphärischen Zylindergeometrien asphärische Zylindergeometrien für die erste und zweite optisch funktionale Grenzfläche 7, 9 zu verwenden. Dadurch können Abbildungsfehler, die bei einer Abbildung mit zueinander gekreuzten Zylinderlinsen entstehen, wirksam kompensiert werden. In dem abgebildeten Ausführungsbeispiel wird diese Kompensation weiterhin durch das zusätzlich eingefügte Korrekturelement 4 vorgenommen, das dritte optisch funktionale Grenzflächen 10, 11 aufweist, die wie aus Fig. 2 ersichtlich ist jeweils einen Zylinderabschnitt 12, 13 umfassen. Diese Zylinderabschnitte 12, 13 der optisch funktionalen Grenzflächen 10, 11 des Korrekturelementes 4 stehen in dem abgebildeten Ausführungsbeispiel senkrecht zueinander und unter einem Winkel von 45° zu den Zylinderachsen der optisch funktionalen Grenzflächen 7, 9. Es besteht die Möglichkeit, die optisch funktionalen Grenzflächen 10, 11 des Korrekturelementes 4 mit einer sphärischen oder einer asphärischen Zylinderlinsengeometrie zu versehen. Als asphärische Geometrien kommen beispielsweise elliptische, hyperbolische oder parabolische Zylindergeometrien in Betracht.

## Patentansprüche

1. Abbildungssystem zur Abbildung elektromagnetischer Strahlung im optischen Spektralbereich umfassend mindestens ein Linsenelement (1, 2) sowie mindestens eine erste und eine zweite optisch funktionale Grenzfläche (7, 9), durch die die elektromagnetische Strahlung hindurchtreten kann, wobei die mindestens eine erste und die mindestens eine zweite optisch funktionale Grenzfläche (7, 9) entweder an dem einen oder an zwei oder mehreren Linsenelementen (1, 2) angeordnet sein können, wobei die mindestens eine erste und die mindestens eine zweite optisch funktionale Grenzfläche (7, 9) zumindest abschnittsweise eine Zylinderlinsengeometrie oder eine zylinderlinsenähnliche Geometrie aufweisen, wobei die Zylinderachse der mindestens einen ersten optisch funktionalen Grenzfläche (7) und die Zylinderachse der mindestens einen zweiten optisch funktionalen Grenzfläche (9) etwa senkrecht zueinander ausgerichtet sind, und wobei ein zusätzliches Korrekturelement mit zwei einander gegenüberliegenden dritten optisch funktionalen Grenzflächen (10, 11) (4) zur Behebung von Abbildungsfehlern der ersten und zweiten funktionalen Grenzflächen vorgesehen ist, die ebenfalls zumindest abschnittsweise eine Zylinderlinsengeometrie oder eine zylinderlinsenähnliche Geometrie aufweisen, **dadurch gekennzeichnet, dass** die Zylinderachsen der dritten optisch funktionalen Grenzflächen (10, 11) senkrecht zueinander und unter einem Winkel von 45° zu den Zylinderachsen der ersten und zweiten optisch funktionalen Grenzflächen (7, 9) ausgerichtet sind.

2. Abbildungssystem nach Anspruch 1, **dadurch gekennzeichnet, dass** die mindestens eine erste und/oder die mindestens eine zweite optisch funktionale Grenzfläche (7, 9) eine asphärische Zylinderlinsengeometrie oder eine asphärische zylinderlinsenähnliche Geometrie aufweisen.

3. Abbildungssystem nach Anspruch 2, **dadurch gekennzeichnet, dass** die asphärische Zylinderlinsengeometrie oder die asphärische zylinderlinsenähnliche Geometrie durch einen elliptischen oder hyperbolischen oder parabolischen Zylinderabschnitt gebildet wird.

4. Abbildungssystem nach einem der Ansprüche 1 bis 3, **dadurch gekennzeichnet, dass** mindestens zwei Linsenelemente (1, 2) vorgesehen sind, wobei an einem der Linsenelemente (1) die erste optisch funktionale Grenzfläche (7) und an einem anderen der Linsenelemente (2) die zweite optisch funktionale Grenzfläche (9) angeordnet ist.

5. Abbildungssystem nach Anspruch 4, **dadurch gekennzeichnet, dass** die Linsenelemente (1, 2) jeweils eine der ersten oder zweiten optisch funktionalen Grenzflächen (7, 9) und eine jeweils diesen Grenzflächen (7, 9) gegenüberliegende plane Eintritts- bzw. Austrittsfläche (6, 8) umfassen.

6. Abbildungssystem nach einem der Ansprüche 4 oder 5, **dadurch gekennzeichnet, dass** das Korrekturelement (4) zwischen dem Linsenelement (1) mit der ersten optisch funktionalen Grenzfläche (7) und dem Linsenelement (2) mit der zweiten optisch funktionalen Grenzfläche (9) angeordnet ist.

7. Abbildungssystem nach einem der Ansprüche 1 bis 6, **dadurch gekennzeichnet, dass** die mindestens eine dritte optisch funktionale Grenzfläche (10, 11) konkav ausgebildet ist.

8. Abbildungssystem nach einem der Ansprüche 1 bis 7, **dadurch gekennzeichnet, dass** die mindestens eine dritte optisch funktionale Grenzfläche (10, 11) eine sphärische oder asphärische Zylinderlinsengeometrie oder zylinderlinsenähnliche Geometrie aufweist.

9. Abbildungssystem nach Anspruch 8, **dadurch gekennzeichnet, dass** die asphärische Zylinderlinsengeometrie oder zylinderlinsenähnliche Geometrie der mindestens einen dritten optisch funktionalen Grenzfläche (10, 11) durch einen elliptischen oder hyperbolischen oder parabolischen Zylinderabschnitt (12, 13) gebildet wird.

10. Abbildungssystem nach einem der Ansprüche 1 bis 9, **dadurch gekennzeichnet, dass** das mindestens eine Linsenelement (1, 2) und das mindestens eine Korrekturelement (4) auf einem gemeinsamen Träger (3) angeordnet sind.

11. Abbildungssystem nach einem der Ansprüche 1 bis 10, **dadurch gekennzeichnet, dass** anstelle von Linsenelementen (1, 2) Arrays oder lineare Zeilen von, insbesondere identischen, Linsenelementen (1, 2) Verwendung finden.

12. Abbildungssystem nach einem der Ansprüche 1 bis 11, **dadurch gekennzeichnet, dass** anstelle von Korrekturelementen (4) Arrays oder lineare Zeilen von, insbesondere identischen, Korrekturelementen (4) Verwendung finden.

13. Objektiv umfassend ein Abbildungssystem nach einem der Ansprüche 1 bis 12.

14. Sensor umfassend ein Abbildungssystem nach einem der Ansprüche 1 bis 12.

15. Kamera umfassend ein Abbildungssystem nach einem der Ansprüche 1 bis 12.

## Claims

1. Imaging system for imaging electromagnetic radiation in the optical spectral region, comprising at least one lens element (1, 2) and at least one first and one second optically functional boundary surface (7, 9) through which the electromagnetic radiation can pass, it being possible for the at least one first and the at least one second optically functional boundary surface (7, 9) to be arranged either on the one or on two or more lens elements (1, 2), the at least one first and the at least one second optically functional boundary surface (7, 9) having at least partially a cylindrical lens geometry or a geometry resembling a cylindrical lens, the cylinder axis of the at least one first optically functional boundary surface (7) and the cylinder axis of the at least one second optically functional boundary surface (9) being aligned approximately perpendicular to one another, and there being provided for eliminating aberrations of the first and second functional boundary surfaces an additional correction element (4) having two mutually opposite third optically functional boundary surfaces (10, 11) which likewise at least partially have a cylindrical lens geometry or a geometry resembling a cylindrical lens, **characterized in that** the cylinder axes of the third optically functional boundary surfaces (10, 11) are aligned perpendicular to one another and at an angle of 45° to the cylinder axes of the first and second optically functional boundary surfaces (7, 9).

2. Imaging system according to Claim 1, **characterized in that** the at least one first and/or the at least one second optically functional boundary surface (7, 9) have an aspheric cylindrical lens geometry or an aspheric geometry resembling a cylindrical lens.

3. Imaging system according to Claim 2, **characterized in that** the aspheric cylindrical lens geometry or the aspheric geometry resembling a cylindrical lens is formed by an elliptic or hyperbolic or parabolic cylinder section.

4. Imaging system according to one of Claims 1 to 3, **characterized in that** at least two lens elements (1, 2) are provided, the first optically functional boundary surface (7) being arranged on one of the lens elements (1) and the second optically functional boundary surface (9) being arranged on another of the lens elements (2).

5. Imaging system according to Claim 4, **characterized in that** the lens elements (1, 2) in each case comprise one of the first or second optically functional boundary surfaces (7, 9) and a plane entrance or exit surface (6, 8) respectively opposite these boundary surfaces (7, 9).

6. Imaging system according to one of Claims 4 or 5, **characterized in that** the correction element (4) is arranged between the lens element (1) with the first optically functional boundary surface (7) and the lens element (2) with the second optically functional boundary surface (9).

7. Imaging system according to one of Claims 1 to 6, **characterized in that** the at least one third optically functional boundary surface (10, 11) is of concave design.

8. Imaging system according to one of Claims 1 to 7, **characterized in that** the at least one third optically functional boundary surface (10, 11) has a spherical or aspheric cylindrical lens geometry or a geometry resembling a cylindrical lens.

9. Imaging system according to Claim 8, **characterized in that** the aspheric cylindrical lens geometry, or the geometry resembling a cylindrical lens, of the at least one third optically functional boundary surface (10, 11) is formed by an elliptic or hyperbolic or parabolic cylinder section (12, 13).

10. Imaging system according to one of Claims 1 to 9, **characterized in that** the at least one lens element (1, 2) and the at least one correction element (4) are arranged on a common carrier (3).

11. Imaging system according to one of Claims 1 to 10, **characterized in that** arrays or linear rows of, particularly identical, lens elements (1, 2) are used instead of lens elements (1, 2).

12. Imaging system according to one of Claims 1 to 11, **characterized in that** arrays or linear rows of, particularly identical, correction elements (4) are used instead of correction elements (4).

13. Objective comprising an imaging system according to one of Claims 1 to 12.

14. Sensor comprising an imaging system according to one of Claims 1 to 12.

15. Camera comprising an imaging system according to one of Claims 1 to 12.

## Revendications

1. Système de formation d'image pour représenter un rayonnement électromagnétique dans la bande spectrale optique comprenant au moins un élément lentille (1, 2) et au moins une première et une deuxième surface de délimitation fonctionnelle optique (7, 9) à travers laquelle peut passer le rayonnement électromagnétique, l'au moins une première et l'au moins une deuxième surface de délimitation fonctionnelle optique (7, 9) pouvant être disposée soit sur l'un soit sur deux éléments lentilles (1, 2) ou plus, l'au moins une première et l'au moins une deuxième surface de délimitation fonctionnelle optique (7, 9) présentant au moins par sections une forme géométrique de lentille cylindrique ou une forme géométrique similaire à une lentille cylindrique, l'axe de cylindre de l'au moins une première surface de délimitation fonctionnelle optique (7) et l'axe de cylindre de l'au moins une deuxième surface de délimitation fonctionnelle optique (9) étant dirigés approximativement perpendiculairement l'un par rapport à l'autre, et un élément correcteur supplémentaire (4) muni de deux troisièmes surfaces de délimitation fonctionnelles optiques (10, 11) opposées l'une à l'autre pour éliminer les défauts de formation de l'image des première et deuxième surfaces de délimitation fonctionnelles étant prévu, lesquelles troisièmes surfaces de délimitation fonctionnelles optiques présentent elles aussi au moins par sections une forme géométrique de lentille cylindrique ou une forme géométrique similaire à une lentille cylindrique, **caractérisé en ce que** les axes de cylindre des troisièmes surfaces de délimitation fonctionnelles optiques (10, 11) sont dirigés perpendiculairement l'un par rapport à l'autre et sous un angle de 45° par rapport aux axes de cylindre des première et deuxième surfaces de délimitation fonctionnelles optiques (7, 9).

2. Système de formation d'image selon la revendication 1, **caractérisé en ce que** l'au moins une première et/ou l'au moins une deuxième surface de délimitation fonctionnelle optique (7, 9) présentent une forme géométrique de lentille cylindrique non sphérique ou une forme géométrique similaire à celle d'une lentille cylindrique non sphérique.

3. Système de formation d'image selon la revendication 2, **caractérisé en ce que** la forme géométrique de lentille cylindrique non sphérique ou la forme géométrique similaire à celle d'une lentille cylindrique non sphérique est formée par une portion de cylindre elliptique ou hyperbolique ou parabolique.

4. Système de formation d'image selon l'une des revendications 1 à 3, **caractérisé en ce qu'**au moins deux éléments lentilles (1, 2) sont prévus, la première surface de délimitation fonctionnelle optique (7) étant disposée sur l'un des éléments lentilles (1) et la deuxième surface de délimitation fonctionnelle optique (9) sur un autre des éléments lentilles (2).

5. Système de formation d'image selon la revendication 4, **caractérisé en ce que** les éléments lentilles (1, 2) comprennent à chaque fois l'une des première ou deuxième surfaces de délimitation fonctionnelles optiques (7, 9) et une surface plane d'entrée ou de sortie (6, 8) à chaque fois à l'opposé de ces surfaces de délimitation (7, 9).

6. Système de formation d'image selon l'une des revendications 4 ou 5, **caractérisé en ce que** l'élément correcteur (4) est disposé entre l'élément lentille (1) comprenant la première surface de délimitation fonctionnelle optique (7) et l'élément lentille (2) comprenant la deuxième surface de délimitation fonctionnelle optique (9).

7. Système de formation d'image selon l'une des revendications 1 à 6, **caractérisé en ce que** l'au moins une troisième surface de délimitation fonctionnelle optique (10, 11) est de forme concave.

8. Système de formation d'image selon l'une des revendications 1 à 7, **caractérisé en ce que** l'au moins une troisième surface de délimitation fonctionnelle optique (10, 11) présente une forme géométrique de lentille cylindrique sphérique ou non sphérique ou une forme géométrique similaire à celle d'une lentille cylindrique sphérique ou non sphérique.

9. Système de formation d'image selon la revendication 8, **caractérisé en ce que** la forme géométrique de lentille cylindrique non sphérique ou la forme géométrique similaire à celle d'une lentille cylindrique non sphérique de l'au moins une troisième surface de délimitation fonctionnelle optique (10, 11) est formée par une portion de cylindre (12, 13) elliptique ou hyperbolique ou parabolique.

10. Système de formation d'image selon l'une des revendications 1 à 9, **caractérisé en ce que** l'au moins un élément lentille (1, 2) et l'au moins un élément correcteur (4) sont disposés sur un support (3) commun.

11. Système de formation d'image selon l'une des revendications 1 à 10, **caractérisé en ce que** des réseaux ou des lignes linéaires d'éléments lentilles (1, 2), notamment identiques, sont utilisés à la place des éléments lentilles (1, 2).

12. Système de formation d'image selon l'une des revendications 1 à 11, **caractérisé en ce que** des réseaux ou des lignes linéaires d'éléments correcteurs (4), notamment identiques, sont utilisés à la place des éléments correcteurs (4).

13. Objectif comprenant un système de formation d'image selon l'une des revendications 1 à 12.

14. Capteur comprenant un système de formation d'image selon l'une des revendications 1 à 12.

15. Caméra comprenant un système de formation d'image selon l'une des revendications 1 à 12.
